# EUROPÄISCHE PATENTANMELDUNG

(11) **EP 0 657 472 A1**
(43) Veröffentlichungstag der Anmeldung: **14.06.1995**
(21) Anmeldenummer: 94119200.7
(22) Anmeldetag: 06.12.1994
(51) Int. Cl.: C08B 15/02

(54) **Verfahren zur Herstellung von Level-off DP Cellulose**

(30) Priorität: 13.12.1993 DE 4342442
(71) Anmelder: Akzo Nobel N.V., NL-6824 BM Arnhem (NL)
(72) Erfinder: Bergfeld, Manfred Josef, Dr., D-63906 Erlenbach-Mechenhard (DE); Seifert, Jürgen, Dr., D-63868 Grosswallstadt (DE)
(74) Vertreter: Fett, Günter

(57) **Zusammenfassung**

Level-off DP Cellulose, die in wäßriger Suspension unter mechanischer Krafteinwirkung zu mikrokristalliner Cellulose desaggregiert werden kann, wird durch partielle Hydrolyse von Cellulose dergestalt hergestellt, daß die Cellulose in einem Druckreaktor mit Wasser unter einem Gasdruck von 0,1 bis 60 bar Sauerstoff und/oder Kohlendioxid, gemessen bei 20°C, bei einer Temperatur von 100 bis 200°C bis zum Erreichen des levelling-off DP partiell hydrolysiert wird. Bevorzugt wird die partielle Hydrolyse unter einem Gasdruck von 0,5 bis 30 bar, gemessen bei 20°C, und in einem Temperaturbereich von 140 bis 180°C durchgeführt.

## Beschreibung

Verfahren zur Herstellung von Level-off DP Cellulose sind bekannt (vgl. z.B. US-PS 2,978,446, US-PS 3,141,875 und US-PS 3,146,168). Der von O.A. Battista in seinem Aufsatz "Hydrolysis and Crystallization of Cellulose" in Industrial and Engineering Chemistry, Vol. 42 (1950), 502-507, geprägte und von der Fachwelt allgemein übernommene Begriff Level-off DP Cellulose beinhaltet unter schonenden Bedingungen partiell hydrolysierte Cellulosen, deren Polymerisationsgrad, der eng mit der Kristallitgröße der Ausgangscellulosen korreliert, als LODP bezeichnet wird (Levelling-off-Polymerisationsgrad) und im Bereich von ca. 30 - 400 liegt.

Die bekannten Verfahren zur Herstellung von Level-off DP Cellulose schließen grundsätzlich eine partielle Hydrolyse von Cellulose unter Bedingungen ein, bei denen nur die amorphen Bereiche dieser teilkristallinen Polysaccharide angegriffen, diese aber vollständig aufgelöst werden. Die partielle Hydrolyse wird hierbei in einem sauren Medium mit wäßrigen Lösungen von Schwefelsäure, FeCl₃ und bevorzugt von Salzsäure durchgeführt, wobei der Polymerisationsgrad bei dieser Behandlung bis auf den LODP sinkt, der je nach Herkunft der Ausgangscellulose erheblich variieren kann. Die so erhaltene Level-off DP Cellulose wird mittels Filtration von der säure- bzw. salzhaltigen Mutterlauge abgetrennt und zur Erzielung eines säure- bzw. salzfreien Produktes mit viel Wasser und gegebenenfalls unter Verwendung von alkalischen Lösungen aufwendig gewaschen, da für Pharmaanwendungen die an ein Reinprodukt gestellten Anforderungen sehr hoch sind. Nach einer Wiederaufschlämmung des Filterkuchens erfolgt eine Sprühtrocknung, bei der das feine, rieselfähige Endprodukt erhalten wird.

Ein großes Problem bei den konventionellen Verfahren bildet der Anfall erheblicher Mengen verschmutzten Abwassers. Folgende Mengen, die in der Praxis jedoch noch heute oft um den Faktor 2-3 übertroffen werden, sind typisch für einen bereits optimierten Prozeß:

| | |
|---|---|
| Benötigte Gesamtwassermenge | 50 L/kg Level-off DP Cellulose |
| Anfallendes NaCl aus der neutralisierten Säure | 80 g/kg Level-off DP Cellulose |
| Anfallende Hemicellulose | 60 g/kg Level-off DP Cellulose |
| was einem CSB entspricht von | 64 g/kg Level-off DP Cellulose |

Der vorliegenden Erfindung liegt daher die Aufgabe zugrunde, ein umweltfreundliches Verfahren zur Herstellung von Level-off DP Cellulose bereitzustellen, mit dem die benötigte Gesamtwassermenge und damit anfallende Abwassermenge pro kg Level-off DP Cellulose drastisch reduziert wird und vor allem das anfallende Abwasser keine anorganischen Salze mehr enthält. Die vorliegende Erfindung stellt sich ferner die Aufgabe, den recht hohen Anfall von organischem Abfall und damit den CSB-Wert (**C**hemischer **S**auerstoff**b**edarf) des aus dem Herstellungsverfahren resultierenden Abwassers zu senken.

Überraschend wurde gefunden, daß die erfindungsgemäß gestellte Aufgabe dadurch gelöst werden kann, daß zur Herstellung von Level-off DP Cellulose die Cellulose in einem Druckreaktor mit Wasser unter einem Gasdruck von 0,1 bis 60 bar Sauerstoff und/oder Kohlendioxid, gemessen bei 20°C, bei einer Temperatur von 100 bis 200°C bis zum Erreichen des Levelling-off DP partiell hydrolysiert wird. Unter Sauerstoff im Sinne der Erfindung werden auch Gasgemische mit inerten Gasen verstanden, die mindestens 20 Gew.% Sauerstoff enthalten, beispielsweise Luft. Bei Anwesenheit von inerten Gasen muß wegen deren Partialdrucke der anzuwendende Totaldruck solcher Gasgemische entsprechend erhöht werden, damit der angestrebte Sauerstoff-Gasdruck erreicht wird.

Eine bevorzugte Ausführungsform des erfindungsgemäßen Verfahrens besteht darin, daß die partielle Hydrolyse unter einem Gasdruck von 0,5 bis 30 bar, gemessen bei 20°C, durchgeführt wird. Zur Erzielung hoher Reaktionsgeschwindigkeiten und guter Farbzahlen bei der Herstellung von Level-off DP Cellulose wird es ferner bevorzugt, daß die partielle Hydrolyse in einem Temperaturbereich von 140 bis 180°C durchgeführt wird.

Für das erfindungsgemäße Verfahren eignen sich im Prinzip alle gereinigten Cellulosen, die nach üblichen Herstellungsverfahren aus den dafür üblichen Rohstoffen hergestellt werden. So können beispielsweise die verwendbaren Zellstoffarten aus Nadelhölzern, wie Fichte, Lärche und Kiefer, aus Laubhölzern, wie Buche, Eukalyptus und Birke, oder aus Einjahrespflanzen und anderen schnellwüchsigen Pflanzen, wie Getreidestroh, Bambus und Schilf, nach dem Sulfit-Zellstoff-Verfahren, Sulfat-Zellstoff-Verfahren oder Salpeter-Zellstoff-Verfahren hergestellt worden sein. Die gereinigten Cellulosen können aber auch aus Cellulosereichen Fasern, wie Baumwolle, Ramie, Flachs und Hanf, gewonnen worden sein. Geeignet sind ebenso regenerierte Cellulosen, wie Rayonfasern und Zellwollen, sowie deren Abfallprodukte. Die mittels der partiellen Hydrolyse erzielbaren LODP-Werte hängen in erster Linie von der Wahl der genannten Rohstoffe ab. Die LODP-Werte liegen bei partiell hydrolysierten Zellstoffarten aus Nadelhölzern, Laubhölzern, Einjahrespflanzen oder anderen schnellwüchsigen Pflanzen und bei partiell hydrolysierten gereinigten Cellulosen aus Cellulose-reichen Fasern bei etwa 200-400, während regenerierte Cellulosen weitaus tiefere LODP-Werte, beispielsweise zwischen 30-100, ergeben.

Schon bei der nicht-kombinatorischen Anwendung der beanspruchten Gasdrucke von Sauerstoff oder von Kohlendioxid gelingt es bei der Herstellung von Level-off DP Cellulose die benötigten Gesamtwassermengen um circa 50%, nämlich von 50 L/kg bei den klassischen Verfahren auf etwa 25 L/kg Level-off DP Cellulose, zu senken. Da mangels Neutralisierungsbedarfs nach dem erfindungsgemäßen Verfahren auch keine Salze mehr als Nebenprodukt anfallen, sind die daraus resultierenden Abwässer entsprechend salzfrei. Die alleinige Verwendung von Sauerstoff oder Kohlendioxid führt auch zu einer bereits merklichen Senkung der CSB-Werte gegenüber den Verfahren des Standes der Technik, nämlich von 64 g/kg auf etwa 30 g/kg bis 50 g/kg Level-off DP Cellulose. Ferner werden bei der partiellen Hydrolyse der Cellulose unter dem alleinigen Gasdruck von Sauerstoff ab etwa 5 bar Level-off DP Cellulosen erhalten, die sich nicht nur gegenüber der eingesetzten Ausgangscellulose durch eine deutliche Farbaufhellung auszeichnen, sondern auch mit Ausbeuten von oberhalb 95% oberhalb des typischen Ausbeuteniveaus der klassischen Verfahren liegen (90 - 95%).

Eine besonders bevorzugte Ausführungsform des erfindungsgemäßen Verfahrens besteht darin, daß die Cellulose unter einem Gasdruck von Sauerstoff und Kohlendioxid partiell hydrolysiert wird. Vorteilhaft ist es hierbei, daß der Partialdruck jeder Gasart 30 bis 70% des Gesamtdrucks beträgt. Die Kombination von reinem Sauerstoff mit Kohlendioxid ergibt Ausbeuten an Level-off DP Cellulose, die die aus den Herstellungsverfahren des Standes der Technik übertreffen. Während für letztere Ausbeuten von 90-95% typisch sind, ergibt die erfindungsgemäße Kombination im allgemeinen solche von 95-98%. Insbesondere aber liefert die Kombination von Sauerstoff und Kohlendioxid in der Regel CSB-Werte von etwa nur 20 bis 30 g/kg Level-off DP Cellulose, so daß sich der Verschmutzungsgrad der aus dem Herstellungsverfahren resultierenden Abwässer auch bezüglich der organischen Verunreinigungen im Vergleich zu den klassischen Verfahren erheblich senken läßt, unabhängig davon, daß auch hier den benötigten und im Vergleich zu den konventionellen Verfahren um etwa 50% reduzierten Gesamtwassermengen aus dem Verfahrensablauf mangels Neutralisierungsbedarfs keine anorganischen Salze mehr zugeführt werden. Darüber hinaus lassen sich innerhalb der Kombination ab einem Sauerstoffpartialdruck von 2,5 bar an dem Endprodukt Farbwerte nach Elrepho von oberhalb 80 erzielen, so daß hiernach erhaltene Level-off DP Cellulosen im Vergleich zu der jeweils eingesetzten Ausgangscellulose eine deutliche Farbaufhellung zeigen.

Die partielle Hydrolyse der Cellulose wird im allgemeinen in üblichen Druckreaktoren ausgeführt, die mit einem Rührer, z.B. einem Propellerrührer oder einem anderen, in der Zellstoff-verarbeitenden Industrie üblichen Rührertyp, ausgestattet sind. Die verwendete Ausgangscellulose wird zunächst in Chips, beispielsweise einer Größe von 5x5x1 mm, geschnitten, und mit überschüssigem Wasser mit den Chips eine wäßrige Reaktionsflotte gebildet, die unter Reaktionsbedingungen bald in Form eines Faserbreis (Pulpe) vorliegt. Das Flottenverhältnis kann in einem weiten Bereich variiert werden und im allgemeinen 1 : 3 bis 1 : 40 betragen. In der Regel wird für das erfindungsgemäße Verfahren ein Flottenverhältnis von 1 : 8 bis 1 : 20 bevorzugt. Der Füllgrad des mit der wäßrigen Reaktionsflotte beschickten Reaktors beträgt im allgemeinen 50 bis 90% seines Nennvolumens.

Der Druckreaktor kann als geschlossenes System betrieben werden, so daß dann das erfindungsgemäße Verfahren diskontinuierlich durchgeführt wird. Da das zur Reaktion verwendete Gas chemisch kaum verbraucht wird, kann es nahezu vollständig für nachfolgende Ansätze rezirkuliert werden. Es ist aber auch möglich, alle Fließvorgänge in Größe und Zusammensetzung konstant zu halten und unter zeitlich konstant bleibenden Reaktionsbedingungen den Druckreaktor vollkontinuierlich zu betreiben. Im Rahmen der Erfindung wird es bevorzugt, daß die Reaktion in einem kontinuierlich betriebenen Druckreaktor durchgeführt wird.

Die nach dem erfindungsgemäßen Verfahren erhaltene Level-off DP Cellulose erfüllt, analog zu Level-off DP Cellulosen, die nach klassischen Verfahren, z.B. mit starken Mineralsäuren, hergestellt werden, alle für pharmazeutische Anwendungen gestellten Anforderungen und läßt sich somit insbesondere als Hilfsmittel für die Herstellung von Tabletten, als Stabilisator für Suspensionen oder wärmestabile O/W-Emulsionen und im Nahrungsmittelsektor einsetzen. Soweit für bestimmte Anwendungen Partikelgrößen um 1 µm oder kleiner erwünscht sind, ist es vorteilhaft, daß in an sich bekannter Weise die Level-off DP Cellulose in wäßriger Suspension unter mechanischer Krafteinwirkung zu mikrokristalliner Cellulose desaggregiert wird.

In den nachfolgenden Beispielen wurde der Sauerstoff oder das Kohlendioxid oder die Kombination beider Gase nach Einfüllen der Flotte und Verschließen des Druckreaktors bei Raumtemperatur aufgedrückt, wobei im Falle eines Druckabfalls, z.B. durch Lösen von Gas in der Flüssigkeit, so lange Gas nachgedrückt wurde, bis die angestrebten Gasdruckwerte in der Gasphase stationär blieben. Demzufolge beziehen sich die beanspruchten Gasdrucke immer auf die Meßtemperatur bei 20°C. Schließlich wurde der Reaktor über seinen Doppelmantel mit Wärmeträgeröl in immer annähernd gleichen Aufheizzeiten auf die Reaktionstemperatur gebracht, wobei das Erreichen der Solltemperatur als Beginn der Reaktionszeit gewertet wurde.

Analytisch wurden an der Level-off DP Cellulose und aus dem Verfahrensablauf die nachfolgenden Parameter bestimmt:

Die Ausbeute wurde anhand der beiden Werte aus der Cellulose-Einwaage und der Reaktionsprodukt-Auswaage, und zwar jeweils mit unter Vakuumbedingungen ofengetrockneten Materialien, als Quotient von Auswaage/Einwaage X 100% bestimmt.

Die Bestimmung des Durchschnittspolymerisationsgrades (= DP) erfolgte nach DIN 54 270, Teil 1 und 2.

Die CSB-Bestimmung wurde nach DIN 38 409 durchgeführt: "Deutsches Einheitsverfahren für Wasser/Abwasser und Flammpunktsverfahren".

Die Farbzahl nach Elrepho wurde an einem Gerät der Firma Zeiß, Oberkochen, Typ "Elrepho", mittels einer Remissionsgradmessung der pulverförmigen Probe gegen die Vergleichssubstanz BaSO₄ unter Verwendung des Filters R46 bestimmt. Die Messung wird, wie in DIN 53145 beschrieben, durchgeführt.

Die Carboxylgruppenzahl (n_{COOH}), welche als ein Maß für die oxidative Schädigung der Cellulose gewertet werden kann, wurde titrimetrisch mit 0.1 N-NaOH an der zuvor mit 1 N-HCl behandelten und anschließend mit vollentsalztem Wasser neutral gewaschenen Probe bestimmt.

Die relative Kristallisationskennzahl (X_{R}) wurde in Anlehnung an die Methode von P.H. Hermans und A. Weidinger (J. Appl. Phys. 19 (1948) 491 bzw. J. Polym. Sci. 4 (1949) 135) bestimmt. "Relativ" bedeutet in diesem Zusammenhang, daß die Zahlen in ihrer relativen Abweichung zueinander vergleichbar sind, jedoch keine absoluten Größen darstellen. Sie sind jedoch alle von den entsprechenden absoluten Werten (welche z.B. über eine Eichreihe mit Substanzen bekannter, absoluter Kristallinität zugänglich wären) lediglich durch einen konstanten Faktor verschieden.

Die Erfindung wird anhand der nachfolgenden Beispiele näher erläutert:

### Beispiel 1

Als Ausgangscellulose wurde ein kommerziell erhältlicher Chemiezellstoff eingesetzt, der nach dem Sulfit-Verfahren aus Nordischer Fichte hergestellt wurde und mit einem α-Cellulose-Gehalt von 92,2%, einem DP von 1400, einer Farbzahl nach Elrepho von 79,4 und einem X_{R}-Wert von 0.66 sowie einer COOH-Zahl von 20 mMol/kg vorlag. Als Druckreaktor wurde eine mit einem Rührer ausgestattete 1L-Labor-Druckapparatur der Firma BÜCHI verwendet. Die Reaktionsflotte wurde aus in ca. 5x5x1 mm geschnittenen Chips des in Blättern vorliegenden Zellstoffs in überschüssigem Wasser gebildet und das Flottenverhältnis betrug 1 : 19. Der Reaktor wurde zu etwa 50% seines Nennvolumens mit dieser Reaktionsflotte gefüllt. Nach dem Verschließen des Druckreaktors wurden bei 20°C 0,5 bar Kohlendioxid aufgedrückt. Danach wurde der Druckreaktor über Doppelmantel mit Wärmeträgeröl auf die Reaktionstemperatur von 160°C gebracht, und das Erreichen dieser Temperatur wurde als Beginn der Reaktionszeit gewertet, die hier 5 Stunden betrug. Nach Ablauf der Reaktionszeit wurde der Druckreaktor in etwa 60 Minuten auf circa 80°C abgekühlt, das Gas abgeblasen und der Reaktor danach geöffnet.

Das Reaktionsprodukt wurde auf einer Nutsche abfiltriert und der Filterkuchen danach mit circa 5 L entionisiertem Wasser pro kg trockener Level-off DP Cellulose auf der Nutsche gewaschen. Der Filterkuchen besaß naß die für Level-off DP Cellulose typische pastöse, "lehmartige" Konsistenz. An dem Filtrat wurden die CSB-Werte gemessen und die in mg/L ermittelten Werte in g/kg erhaltener Level-off DP Cellulose umgerechnet.

Nach einer Trocknung über Nacht bei 60°C und 20 mbar wurde der nunmehr als harter, spröder Block vorliegende Filterkuchen in einer Labormühle zu einem feinen rieselfähigen Produkt gemahlen. An diesem wurde anschließend der Farbwert, der DP und die relative Kristallisationskennzahl (X_{R}) bestimmt. Die Eigenschaften der erhaltenen Level-off DP Cellulose, die Ausbeute und der CSB-Wert waren wie folgt:

| | | | |
|---|---|---|---|
| Ausbeute: | 97,1% | CSB (g/kg Endprodukt): | 28,1 |
| DP: | 295 | Farbe nach Elrepho: | 78,8 |
| X_{R}: | 0,69 | | |

### Beispiel 2

Beispiel 1 wurde wiederholt mit der Abänderung, daß nunmehr die partielle Hydrolyse unter einem Kohlendioxid-Gasdruck von 5,0 bar durchgeführt wurde. Die Eigenschaften der erhaltenen Level-off DP Cellulose, die Ausbeute und der CSB-Wert in g/kg Level-off DP Cellulose waren wie folgt:

| | | | |
|---|---|---|---|
| Ausbeute: | 97,0% | CSB (g/kg Endprodukt): | 48,5 |
| DP: | 302 | Farbe nach Elrepho: | 78,2 |
| X_{R}: | 0,71 | | |

### Beispiel 3

Beispiel 1 wurde wiederholt mit der Abänderung, daß die partielle Hydrolyse unter einem Kohlendioxid-Gasdruck von 10,0 bar durchgeführt wurde. Die Eigenschaften der erhaltenen Level-off DP Cellulose, die Ausbeute, der CSB-Wert in g/kg Level-off DP Cellulose, sowie die Carboxylgruppenzahl waren wie folgt:

| | | | |
|---|---|---|---|
| Ausbeute: | 94,8% | CSB (g/kg Endprodukt): | 36,7 |
| DP: | 318 | Farbe nach Elrepho: | 78,5 |
| X_{R}: | 0,70 | n_{COOH}: | 12 mMol/kg |

### Beispiel 4

Beispiel 1 wurde mit mehreren Abänderungen dergestalt wiederholt, daß die Reaktionstemperatur 160°C und die Reaktionszeit 2 Stunden betrug. Ferner wurde die partielle Hydrolyse bzw. die Herabsetzung des durchschnittlichen Polymerisationsgrades unter einem Sauerstoff-Gasdruck von 2,5 bar durchgeführt. Die Eigenschaften der erhaltenen Level-off DP Cellulose, die Ausbeute und der CSB-Wert in g/kg Level-off DP Cellulose waren wie folgt:

| | | | |
|---|---|---|---|
| Ausbeute: | 92,7% | CSB (g/kg Endprodukt): | 31,9 |
| DP: | 303 | Farbe nach Elrepho: | 79,2 |
| X_{R}: | 0,71 | | |

### Beispiel 5

Beispiel 4 wurde wiederholt mit der Abänderung, daß die Herabsetzung des durchschnittlichen Polymerisationsgrades unter einem Sauerstoff-Gasdruck von 5,0 bar durchgeführt wurde. Die Eigenschaften der erhaltenen Level-off DP Cellulose, die Ausbeute und der CSB-Wert in g/kg Level-off DP Cellulose waren wie folgt:

| | | | |
|---|---|---|---|
| Ausbeute: | 95,9% | CSB (g/kg Endprodukt): | 30,5 |
| DP: | 313 | Farbe nach Elrepho: | 82,9 |
| X_{R}: | 0,71 | | |

### Beispiel 6

Beispiel 4 wurde wiederholt mit der Abänderung, daß die partielle Hydrolyse unter einem Sauerstoff-Gasdruck von 10,0 bar durchgeführt wurde. Die Eigenschaften der erhaltenen Level-off DP Cellulose, die Ausbeute und der CSB-Wert in g/kg Level-off DP Cellulose waren wie folgt:

| | | | |
|---|---|---|---|
| Ausbeute: | 97,0% | CSB (g/kg Endprodukt): | 29,4 |
| DP: | 305 | Farbe nach Elrepho: | 83,4 |
| X_{R}: | 0.71 | | |

### Beispiel 7

In diesem Beispiel wurde die partielle Hydrolyse des Zellstoffs analog Beispiel 4 mit einer Kombination von Sauerstoff und Kohlendioxid durchgeführt. Die Reaktionstemperatur betrug also 160°C und die Reaktionszeit 2 Stunden. Der Partialdruck sowohl des Sauerstoffs als auch des Kohlendioxids betrug 2,5 bar. Ansonsten war die Versuchsdurchführung wie in Beispiel 1. Die Eigenschaften der erhaltenen Level-off DP-Cellulose, die Ausbeute, der CSB-Wert in g/kg Level-off DP Cellulose, sowie die COOH-Zahl waren wie folgt:

| | | | |
|---|---|---|---|
| Ausbeute: | 98,2% | CSB (g/kg Endprodukt): | 28,5 |
| DP: | 318 | Farbe nach Elrepho: | 80,8 |
| X_{R}: | 0.72 | n_{COOH}: | 13 mMol/kg |

### Beispiel 8

Beispiel 7 wurde wiederholt mit der Abänderung, daß die Partialdrucke des Sauerstoffs und des Kohlendioxids je 5,0 bar betrugen. Die Eigenschaften der erhaltenen Level-off DP Cellulose, die Ausbeute und der CSB-Wert in g/kg Level-off DP Cellulose, sowie die COOH-Zahl waren wie folgt:

| | | | |
|---|---|---|---|
| Ausbeute: | 96,1% | CSB (g/kg Endprodukt): | 20,9 |
| DP: | 312 | Farbe nach Elrepho: | 81,6 |
| X_{R}: | 0.72 | n_{COOH}: | 14 mMol/kg |

### Beispiel 9

Beispiel 7 wurde wiederholt mit der Abänderung, daß die Partialdrucke des Sauerstoffs und des Kohlendioxids je 10,0 bar betrugen. Die Eigenschaften der erhaltenen Level-off DP Cellulose, die Ausbeute und der CSB-Wert in g/kg Level-off DP Cellulose waren wie folgt:

| | | | |
|---|---|---|---|
| Ausbeute: | 95,3% | CSB (g/kg Endprodukt): | 30,1 |
| DP: | 308 | Farbe nach Elrepho: | 84,1 |
| X_{R}: | 0.71 | | |

### Beispiel 10

In diesem Beispiel wurde die partielle Hydrolyse des Zellstoffs mit einer Kombination von Sauerstoff und Kohlendioxid in einem 3 L-BÜCHI-Labor-Rührautoklav bei einer Reaktionstemperatur von 180°C mit einer Reaktionszeit von 15 Minuten durchgeführt. Der Partialdruck sowohl des Sauerstoffs als auch des Kohlendioxids betrug 2,5 bar, gemessen bei 20°C, der Gesamtdruck bei der Reaktionstemperatur von 180°C betrug 20,6 bar. Ansonsten war die Versuchsdurchführung wie in Beispiel 1. Die Eigenschaften der erhaltenen Level-off DP Cellulose, die Ausbeute und der CSB-Wert in g/kg Level-off DP Cellulose, sowie die COOH-Zahl waren wie folgt:

| | |
|---|---|
| Ausbeute: 95,4% | CSB (g/kg Endprodukt): 31,4 |
| DP: 315 | Farbe nach Elrepho: 83,1 |
| X_{R}: 0,69 | n_{COOH}: 12 mMol/kg |

### Beispiel 11

Beispiel 10 wurde wiederholt mit der Abänderung, daß nunmehr die partielle Hydrolyse unter einem Sauerstoff-Gasdruck von 5,0 bar, gemessen bei 20°C, mit einem Flottenverhältnis von 1 : 10 durchgeführt wurde. Während der 15-minütigen Reaktionszeit betrug der Gesamtdruck bei der Reaktionstemperatur von 180°C 17,9 bar. Die Eigenschaften der erhaltenen Level-off DP Cellulose, die Ausbeute und der CSB-Wert in g/kg Level-off DP Cellulose waren wie folgt:

| | |
|---|---|
| Ausbeute: 95,8% | |
| DP: 308 | CSB (g/kg Endprodukt): 43,8 |
| X_{R}: 0,70 | Farbe nach Elrepho: 81,3 |

### Beispiel 12

In einem Technikumsversuch wurde die partielle Hydrolyse des Zellstoffs unter einem Sauerstoff-Gasdruck von 5,0 bar, wie immer bei 20°C gemessen, im 100 L-Maßstab bei einem Flottenverhältnis von 1 : 19 durchgeführt. Als Reaktor wurde hierbei ein 150 L-Titan-Druckautoklav der Firma Friedrichsfeld mit einem Schrägblattrührwerk verwendet. Die Beheizung erfolgte auch hier über Doppelmantel mit Wärmeträgeröl. Die Reaktionstemperatur betrug 180°C, der Gesamtdruck bei dieser 17,0 bar und die Reaktionszeit 0,5 h.

Das erhaltene Reaktionsprodukt wurde nach einer Zentrifugen-Wäsche mit 5 L Wasser/kg Produkt sprühgetrocknet und einem Spezifikationstest unterzogen, wie er in der US-Pharmacopeia für mikrokristalline Cellulose, die für Pharmaanwendungen eingesetzt werden soll, beschrieben ist. Die erhaltenen Ergebnisse sind im Vergleich zum etablierten, kommerziell erhältlichen Produkt Avicel PH 101 der US-Firma FMC Corp., Philadelphia, in der nachfolgenden Tabelle dargestellt:

**Tab. 1**

| **Spezifikationstest für Level-off DP Cellulosen** Spezifikationen nach US Pharmacopeia XXI, NF XVI, S. 1546 | | |
|---|---|---|
| Spezifikation | kommerziell erhältliche Vergleichssubstanz (Avicel PH 101) | Probe nach erfindungsgemäßem Verfahren (Beispiel 12) |
| Korngrößen | | |
| < 1% 250 µm | 0.0% | 0.2% |
| < 30% 75 µm | 9.9% | 16.2% |
| mittl. Durchmesser [µm] ^{·} | 45.1 | 41.6 |
| Wassergehalt < 6 Gew.% | 4.5% | 4.7% |
| pH-Wert 5.5 - 7.0 | 6.1 | 5.5 |
| wasserlösl. Anteile < 0.16 Gew.% | 0.13% | 0.07% |
| etherlösl. Anteile < 0.05 Gew.% | 0.005% | 0.003% |
| Stärke nicht nachweisbar | + | + |
| Sedimentation keine in 3 h | + | + |
| Aschegehalt < 0.1 Gew.% | 0.05 | 0.03 |
| Weißgrad n. Elrepho ^{·} | 78.8 | 82.6 |
| Chlorid-Gehalt [ppm] ^{·} | 140 | 76 |
| DP ^{·} | 283 ± 10 | 295 ± 10 |
| + = Spezifikation erfüllt | | |

| | | |
|---|---|---|
| ^{·} = keine Spezifikation nach US Pharmacopeia, aber wichtiger Vergleichsparameter | | |

Danach kann das gemäß Beispiel 12 erhaltene Produkt gegenüber dem Vergleichsprodukt als teilweise überlegen bezeichnet werden. Die übrigen Eigenschaften der erhaltenen Level-off DP Cellulose waren wie folgt:

| | |
|---|---|
| Ausbeute: 95,3% | CSB (g/kg Endprodukt): 41,6 |
| DP: 295 | Farbe nach Elrepho: 82,6 |
| X_{R}: 0,73 | |

## Patentansprüche

1. Verfahren zur Herstellung von Level-off DP Cellulose durch partielle Hydrolyse von Cellulose unter Bedingungen, bei denen nur die amorphen Bereiche dieser teilkristallinen Polysaccharide angegriffen, diese aber vollständig aufgelöst werden, dadurch gekennzeichnet, daß die Cellulose in einem Druckreaktor mit Wasser unter einem Gasdruck von 0,1 bis 60 bar Sauerstoff und/oder Kohlendioxid, gemessen bei 20°C, bei einer Temperatur von 100 bis 200°C bis zum Erreichen des levelling-off DP partiell hydrolysiert wird.

2. Verfahren nach Anspruch 1, dadurch gekennzeichnet, daß die partielle Hydrolyse unter einem Gasdruck von 0,5 bis 30 bar, gemessen bei 20°C, durchgeführt wird.

3. Verfahren nach einem oder mehreren der Ansprüche 1 bis 2, dadurch gekennzeichnet, daß die partielle Hydrolyse in einem Temperaturbereich von 140 bis 180°C durchgeführt wird.

4. Verfahren nach einem oder mehreren der Ansprüche 1 bis 3, dadurch gekennzeichnet, daß die Cellulose unter einem Gasdruck von Sauerstoff und Kohlendioxid partiell hydrolysiert wird.

5. Verfahren nach Anspruch 4, dadurch gekennzeichnet, daß der Partialdruck jeder Gasart 30 bis 70% des Gesamtgasdrucks beträgt.

6. Verfahren nach einem oder mehreren der Ansprüche 1 bis 5, dadurch gekennzeichnet, daß die Cellulose in einer wäßrigen Reaktionsflotte mit einem Flottenverhältnis von 1 : 3 bis 1 : 40 eingesetzt wird.

7. Verfahren nach Anspruch 6, dadurch gekennzeichnet, daß das Flottenverhältnis 1 : 8 bis 1 : 20 beträgt.

8. Verfahren nach einem oder mehreren der Ansprüche 1 bis 7, dadurch gekennzeichnet, daß der Füllgrad des Reaktors 50 bis 90% seines Nennvolumens beträgt.

9. Verfahren nach einem oder mehreren der Ansprüche 1 bis 8, dadurch gekennzeichnet, daß die Reaktion in einem kontinuierlich betriebenen Reaktor durchgeführt wird.

10. Verfahren nach einem oder mehreren der Ansprüche 1 bis 9, dadurch gekennzeichnet, daß die Level-off DP Cellulose in wäßriger Suspension unter mechanischer Krafteinwirkung zu mikrokristalliner Cellulose desaggregiert wird.
